# EUROPEAN PATENT APPLICATION

(11) **EP 4 607 349 A1**
(43) Date of publication of application: **27.08.2025**
(21) Application number: 22964803.5
(22) Date of filing: 10.11.2022
(51) Int. Cl.: G06F 9/50

(54) **METHOD AND APPARATUS FOR ADJUSTING COMPUTING RESOURCES, AND INTELLIGENT DRIVING DEVICE**

(71) Applicant: Shenzhen Yinwang Intelligent Technologies Co., Ltd., Shenzhen, Guangdong 518129 (CN)
(72) Inventor: DING, Tao, Shenzhen, Guangdong 518129 (CN)
(74) Representative: Pfenning, Meinig & Partner mbB
(86) International application number: PCT/CN2022/131164
(87) International publication number: WO 2024/098333

(57) **Abstract**

A method and an apparatus for adjusting a computing resource, and an intelligent driving device are provided. The computing resource includes a dedicated computing units and b shared computing units that run in parallel, and the a dedicated computing units are allocated to m service domains. The method includes: obtaining first usage data of each of K service domains (S310); determining, based on the first usage data of each of the k service domains, a first quantity of computing units required by a target service domain in the k service domains (S320), where the k service domains are one or more of the m service domains; determining, in the b shared computing units based on the first quantity and a second quantity of dedicated computing units that are in the a dedicated computing units and that have been allocated to the target service domain, a third quantity of shared computing units that need to be allocated to the target service domain (S330); and allocating the third quantity of shared computing units to the target service domain (S340). According to the method, a computing resource in the target service domain may be adjusted with reference to a usage habit of a user, so that a service processing capability of the target service domain can be ensured.

## Description

### TECHNICAL FIELD

This application relates to the field of intelligent driving technologies, and more specifically, to a method and an apparatus for adjusting a computing resource, and an intelligent driving device.

### BACKGROUND

In comparison with a conventional mode of independent operation of a plurality of service domains, a central computing platform can integrate computing resources of different service domains, greatly saving resources and costs. For example, in the field of vehicles, computing resources of service domains such as an intelligent driving domain, a vehicle control domain, and a cockpit domain are all deployed on the central computing platform, and the central computing platform divides the computing resources by service domain, and performs central computing in a centralized manner.

Currently, a mainstream computing resource allocation solution is to virtualize the computing resources of the central computing platform before delivery, and then divide different computing resources for different service domains. However, on the basis of the pre-divided computing resources, in a process of using a vehicle by a user, computing resources may be insufficient in some service domains, and consequently a service processing capability is reduced.

Therefore, how to ensure the service processing capability of the central computing platform is an urgent problem to be resolved.

### SUMMARY

This application provides a method and an apparatus for adjusting a computing resource, and an intelligent driving device, to ensure a service processing capability of a central computing platform.

According to a first aspect, a method for adjusting a computing resource is provided. The computing resource includes a dedicated computing units and b shared computing units that run in parallel, and the a dedicated computing units are allocated to m service domains, where a, b, and m are all positive integers greater than or equal to 2. The method includes: obtaining first usage data of each of k service domains, where the first usage data is data about using the service domain by a user in a first historical time period, and the k service domains are one or more of the m service domains; determining, based on the first usage data of each service domain, a first quantity of computing units required by a target service domain in the k service domains; determining, in the b shared computing units based on the first quantity and a second quantity of dedicated computing units that are in the a dedicated computing units and that have been allocated to the target service domain, a third quantity of shared computing units that need to be allocated to the target service domain; and allocating the third quantity of shared computing units to the target service domain.

The dedicated computing unit is a computing unit dedicated to a service domain. After the a dedicated computing units are allocated to the m service domains, each of the a dedicated computing units is dedicated to a service domain to which the dedicated computing unit is allocated, and is no longer used in another service domain.

The shared computing unit is a computing unit that can be shared by a plurality of service domains, but is not dedicated to a specific service domain. A shared computing unit A in the b shared computing units is used as an example. The shared computing A may be allocated to a first service domain at a first moment, and the shared computing unit A may be allocated to a second service domain at a second moment.

The a dedicated computing units may be allocated to the m service domains based on a preset proportion, and the preset proportion may be determined by a person skilled in the art based on experience.

In this application, the shared computing unit is introduced, so that in a process in which a user uses a computing resource, the computing resource in the target service domain can be flexibly adjusted based on the shared computing unit with reference to a usage habit of the user. For example, when a dedicated computing unit in the target service domain cannot meet a requirement of the user, one or more shared computing units may be allocated to the target service domain based on the requirement of the user. Therefore, a service processing capability of the target service domain can be ensured; and preemption of a dedicated computing unit of another service domain when a computing requirement of the target service domain is large can be avoided, thereby ensuring service running stability of each service domain.

With reference to the first aspect, in some implementations of the first aspect, after the third quantity of shared computing units are allocated to the target service domain, the method further includes: grouping computing units in the target service domain based on prior information of the target service domain, where the prior information includes information about a service that has been deployed in the target service domain; and redeploying the service in the target service domain after grouping.

The information about the deployed service is an operator involved in each service in the deployed service and a quantity of computing units required by each operator.

In this application, after the third quantity of shared computing units are allocated to the target service domain, the computing units in the target service domain may be grouped based on the information about the service that has been deployed in the target service domain, and the service is redeployed in the target service domain after grouping, so as to ensure continuity and stability of running of each service in the target service domain.

With reference to the first aspect, in some implementations of the first aspect, the grouping computing units in the target service domain based on prior information of the target service domain includes: determining a grouping strategy set of the computing units in the target service domain based on a preset condition; determining a target grouping strategy based on the prior information of the target service domain, where the target grouping strategy is a strategy in the grouping strategy set; and grouping the computing units in the target service domain according to the target grouping strategy.

In this application, the grouping strategy set of the computing units in the target service domain may be first determined based on the preset condition, then the target grouping strategy is selected from the grouping strategy set based on the prior information of the target service domain, and the computing units in the target service domain are grouped according to the target grouping strategy, so that the target grouping strategy can be determined more quickly and effectively, and an invalid running time is reduced.

With reference to the first aspect, in some implementations of the first aspect, the preset condition includes at least one of the following: a quantity of computing units included in each group is 2ⁿ, where n is a positive integer greater than or equal to 1; a quantity of groups is less than or equal to a quantity of services that need to be deployed; a quantity of computing units in a first group is less than or equal to a quantity of computing units required by a first operator, where the first group is a group that includes a largest quantity of computing units in a service domain, and the first operator is an operator that requires a largest quantity of computing units in a service that needs to be deployed; or a quantity of computing units in a second group is greater than or equal to a quantity of computing units required by a second operator, where the second group is a group that includes a smallest quantity of computing units in a service domain, and the second operator is an operator that requires a smallest quantity of computing units in a service that needs to be deployed.

With reference to the first aspect, in some implementations of the first aspect, the determining, based on the first usage data of each service domain, a first quantity of computing units required by a target service domain in the k service domains includes: determining a user experience evaluation result of the k service domains based on the first usage data of each service domain; determining a corresponding computing unit requirement solution based on the user experience evaluation result; and determining, based on the computing unit requirement solution, the first quantity of computing units required by the target service domain.

In an actual operation, correspondences between different evaluation results and different requirement solutions may be preset based on a mapping table. Based on this, in this application, the user experience evaluation result of the k service domains may be first determined based on the first usage data of each service domain, then a requirement solution corresponding to the evaluation result is obtained by searching the mapping table, and then the quantity of computing units required by the target service domain is determined based on the requirement solution.

With reference to the first aspect, in some implementations of the first aspect, the method further includes: obtaining second usage data of each of the k service domains, where the second usage data is data about using the service domain by the user in a second historical time period; and updating a quantity of computing units in the target service domain based on the second usage data.

In this application, the quantity of computing units in the target service domain may be flexibly updated based on the usage habit of the user in different time periods, so that a service processing capability of the target service domain can be ensured in different time periods even if the usage habit of the user changes.

With reference to the first aspect, in some implementations of the first aspect, the first usage data and/or the second usage data include/includes: one or more of operation data of the user, response duration of a service operated by the user, a computing unit usage proportion of each service domain, and a usage score of a service.

The usage score of the serve may be a score generated by a computing system based on a service running state, or may be a score provided by the user based on a sense of experience of the user.

With reference to the first aspect, in some implementations of the first aspect, the m service domains are located in a vehicle.

According to a second aspect, an apparatus for adjusting a computing resource is provided. The computing resource includes a dedicated computing units and b shared computing units that run in parallel, and the a dedicated computing units are allocated to m service domains, where a, b, and m are all positive integers greater than or equal to 2. The apparatus includes an obtaining module and a processing module. The obtaining module is configured to obtain first usage data of each of k service domains, where the first usage data is data about using the service domain by a user in a first historical time period, and the k service domains are one or more of the m service domains. The processing module is configured to: determine, based on the first usage data of each service domain, a first quantity of computing units required by a target service domain in the k service domains; determine, in the b shared computing units based on the first quantity and a second quantity of dedicated computing units that are in the a dedicated computing units and that have been allocated to the target service domain, a third quantity of shared computing units that need to be allocated to the target service domain; and allocate the third quantity of shared computing units to the target service domain.

With reference to the second aspect, in some implementations of the second aspect, the processing module is further configured to: group computing units in the target service domain based on prior information of the target service domain, where the prior information includes information about a service that has been deployed in the target service domain; and redeploy the service in the target service domain after grouping.

With reference to the second aspect, in some implementations of the second aspect, the processing module is further configured to: determine a grouping strategy set of the computing units in the target service domain based on a preset condition; determine a target grouping strategy based on the prior information of the target service domain, where the target grouping strategy is a strategy in the grouping strategy set; and group the computing units in the target service domain according to the target grouping strategy.

With reference to the second aspect, in some implementations of the second aspect, the preset condition includes at least one of the following: a quantity of computing units included in each group is 2ⁿ, where n is a positive integer greater than or equal to 1; a quantity of groups is less than or equal to a quantity of services that need to be deployed; a quantity of computing units in a first group is less than or equal to a quantity of computing units required by a first operator, where the first group is a group that includes a largest quantity of computing units in a service domain, and the first operator is an operator that requires a largest quantity of computing units in a service that needs to be deployed; or a quantity of computing units in a second group is greater than or equal to a quantity of computing units required by a second operator, where the second group is a group that includes a smallest quantity of computing units in a service domain, and the second operator is an operator that requires a smallest quantity of computing units in a service that needs to be deployed.

With reference to the second aspect, in some implementations of the second aspect, the processing module is configured to: determine a user experience evaluation result of the k service domains based on the first usage data of each service domain; determine a corresponding computing unit requirement solution based on the user experience evaluation result; and determine, based on the computing unit requirement solution, the first quantity of computing units required by the target service domain.

With reference to the second aspect, in some implementations of the second aspect, the processing module is further configured to: obtain second usage data of each of the k service domains, where the second usage data is data about using the service domain by the user in a second historical time period; and update a quantity of computing units in the target service domain based on the second usage data.

With reference to the second aspect, in some implementations of the second aspect, the first usage data and/or the second usage data include/includes: one or more of operation data of the user, response duration of a service operated by the user, a computing unit usage proportion of each service domain, and a usage score of a service.

With reference to the second aspect, in some implementations of the second aspect, the m service domains are located in a vehicle.

With reference to the second aspect, in some implementations of the second aspect, the apparatus further includes the a dedicated computing units and the b shared computing units.

According to a third aspect, an apparatus for adjusting a computing resource is provided, including an input/output interface, a processor, and a memory. The processor is configured to control the input/output interface to receive and send a signal or information. The memory is configured to store a computer program. The processor is configured to invoke the computer program from the memory and run the computer program, so that the apparatus for adjusting a computing resource is enabled to perform the method for adjusting a computing resource according to any one of the first aspect or the possible implementations of the first aspect.

According to a fourth aspect, a computer-readable medium is provided, where the computer-readable medium stores program code, and when the program code is run on a computer, the computer is enabled to perform the method for adjusting a computing resource according to any one of the first aspect or the possible implementations of the first aspect.

According to a fifth aspect, a computer program product is provided, including instructions. When the instructions are run on a computer, the method for adjusting a computing resource according to any one of the first aspect or the possible implementations of the first aspect is performed.

According to a sixth aspect, a computing device is provided, including at least one processor and a memory, where the at least one processor is coupled to the memory, and is configured to read and execute instructions in the memory, to perform the method for adjusting a computing resource according to any one of the first aspect or the possible implementations of the first aspect.

According to a seventh aspect, a chip is provided. The chip includes a circuit configured to perform the method for adjusting a computing resource according to any one of the first aspect or the possible implementations of the first aspect.

According to an eighth aspect, an intelligent driving device is provided, including the apparatus for adjusting a computing resource according to any one of the second aspect or the possible implementations of the second aspect, or including the apparatus for adjusting a computing resource according to the third aspect.

### BRIEF DESCRIPTION OF DRAWINGS

FIG. 1 is a functional diagram of a vehicle 100 according to an embodiment of this application;
FIG. 2 is a diagram of division of a computing resource of a vehicle;
FIG. 3 is a diagram of a method for adjusting a computing resource according to an embodiment of this application;
FIG. 4 is a diagram of division of a computing resource according to an embodiment of this application;
FIG. 5 is a diagram of a method for adjusting a computing resource by a vehicle according to an embodiment of this application;
FIG. 6 is a diagram of initializing a computing resource of a vehicle according to an embodiment of this application;
FIG. 7 is a diagram of an adjusted computing resource according to an embodiment of this application;
FIG. 8 is a diagram of a structure of an apparatus for adjusting a computing resource according to an embodiment of this application; and
FIG. 9 is a block diagram of a hardware structure of an apparatus for adjusting a computing resource according to an embodiment of this application.

### DESCRIPTION OF EMBODIMENTS

The following describes technical solutions of embodiments in this application with reference to accompanying drawings.

The solutions of this application may be applied to an intelligent driving device. The intelligent driving device may include a road vehicle, a water vehicle, an air vehicle, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an amusement device, a toy vehicle, or the like. A type of the vehicle is not specifically limited in this application. For another example, the intelligent driving device may be a transportation tool like an airplane or a ship.

The solutions of this application may be further applied to devices such as a server, an intelligent terminal, a smart home, and an in-vehicle embedded device. For example, the solutions of this application may be applied to a smartphone, a desktop computer, a notebook computer, a tablet computer, a wearable device, a robot, a microcontroller unit (microcontroller unit, MCU), or an electronic control unit (electronic control unit, ECU).

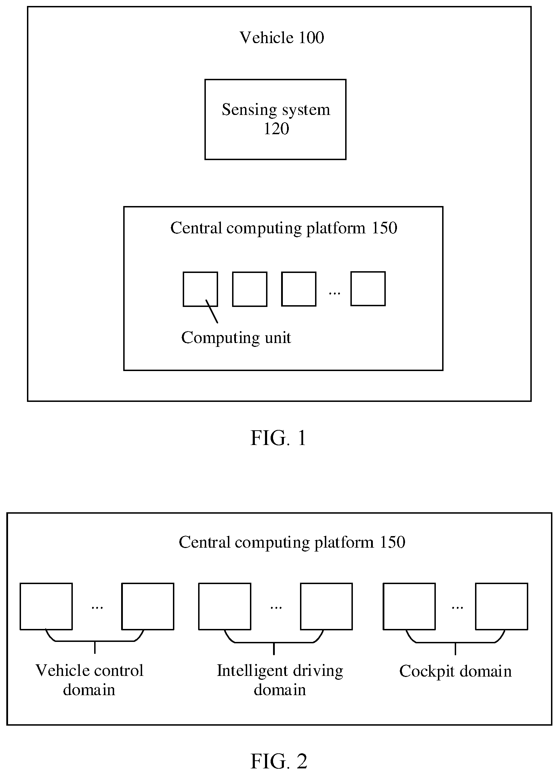

With reference to FIG. 1, the following describes an application scenario of this application by using a vehicle as an example.

FIG. 1 is a functional diagram of a vehicle 100 according to an embodiment of this application. It should be understood that FIG. 1 and related descriptions are merely examples, and an actual vehicle may not be limited thereto. As shown in FIG. 1, the vehicle 100 may include a sensing system 120 and a central computing platform 150.

The sensing system 120 may include one or more sensors that sense information about an environment around the vehicle 100. For example, the sensing system 120 may include a positioning system, and the positioning system may be a global positioning system (global positioning system, GPS), or may be a BeiDou system or another positioning system, or an inertial measurement unit (inertial measurement unit, IMU). For another example, the sensing system 120 may further include one or more of a lidar, a millimeter-wave radar, an ultrasonic radar, and a camera apparatus.

The central computing platform 150 is configured to analyze and process data sensed by the sensing system 120, and control some or all functions of the vehicle 100. The central computing platform 150 includes a computing resource, and the computing resource may include a plurality of computing units that run in parallel. To better cope with resource collaboration between a plurality of service domains in the vehicle 100, a conventional mainstream technical solution mainly uses resource virtualization, and the computing resources of the central computing platform 150 are allocated to different service domains for use in a virtualization manner. For example, the service domains of the vehicle 100 include an intelligent driving domain, a vehicle control domain, and a cockpit domain. After virtualization, the computing resources of the central computing platform 150 may be allocated to these service domains for use, as shown in FIG. 2. Division of the service domains is not limited in this application. The service domains of the vehicle 100 may alternatively be divided based on a power domain, a vehicle body domain, a chassis domain, an entertainment information domain, and the like. For ease of description, in this application, the intelligent driving domain, the vehicle control domain, and the cockpit domain are mainly used as examples for description.

In the conventional solution, a computing resource divided for each service domain based on the foregoing method is specially used for each service domain during running of the vehicle 100. However, different users have different requirements and use manners for computing resources of each service domain or a same user have different requirements and use manners for computing resources of each service domain in different time periods. If the computing resources are pre-divided, computing resources may be insufficient in some service domains in a process of using the vehicle by a user, and consequently, a service processing capability is reduced. In addition, because a self-driving solution pursues certainty, when computing resources of some service domains are insufficient, these service domains may preempt computing resources of other service domains. Consequently, the computing resources of the plurality of service domains are preempted back and forth. For example, when the cockpit domain runs a task with high computing power, the cockpit domain may preempt a computing resource in the intelligent driving domain. This causes computing power of the intelligent driving domain to be insufficient, directly affects an enabled self-driving function, and causes a case in which a driver needs to take over.

In addition, for the vehicle 100, stable running of the intelligent driving domain and the cockpit domain of self-driving needs to be ensured. If the computing resources of the plurality of service domains are directly and dynamically adjusted as a whole when the vehicle 100 runs (that is, all computing units are directly reallocated based on a requirement of each service domain when the vehicle 100 runs), uncertainty of an entire system is caused, and stability and security of the entire vehicle are affected.

Based on this, a shared computing unit is introduced in this application, and a computing resource is flexibly adjusted based on the shared computing unit with reference to a usage habit of the user, so that a service processing capability of a service domain and service running stability can be ensured.

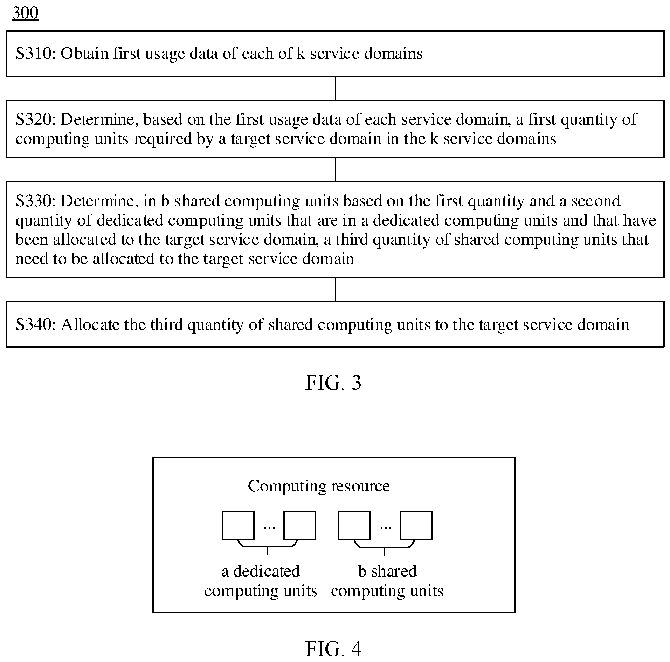

FIG. 3 is a diagram of a method for adjusting a computing resource according to an embodiment of this application. The computing resource may be an artificial intelligence (artificial intelligence, AI) computing resource, a central processing unit (central processing unit, CPU) computing resource, a graphics processing unit (graphics processing unit, GPU) computing resource, or the like. The computing resource includes a dedicated computing units and b shared computing units that run in parallel, as shown in FIG. 4. In other words, the computing resource is divided into the a dedicated computing units and the b shared computing units that run in parallel. The a dedicated computing units are allocated to m service domains, to provide computing capabilities for the m service domains, where a, b, and m are all positive integers greater than or equal to 2.

The dedicated computing unit is a computing unit dedicated to a service domain. After the a dedicated computing units are allocated to the m service domains, each of the a dedicated computing units is dedicated to a service domain to which the dedicated computing unit is allocated, and is no longer used in another service domain. The shared computing unit is a computing unit that can be shared by a plurality of service domains, but is not dedicated to a specific service domain. A shared computing unit A in the b shared computing units is used as an example. The shared computing unit A may be allocated to a first service domain at a first moment, and the shared computing unit A may be allocated to a second service domain at a second moment.

The a dedicated computing units may be allocated to the m service domains based on a preset proportion, and the preset proportion may be determined by a person skilled in the art based on experience. For example, the method is applied to the field of vehicles. The m service domains may be located in a vehicle. For example, the m service domains may be an intelligent driving domain, a vehicle control domain, and a cockpit domain.

As shown in FIG. 3, the method 300 includes steps S310 to S340. The following describes these steps in detail.

S310: Obtain first usage data of each of k service domains, where the k service domains are one or more of the m service domains, and the first usage data is data about using the service domain by a user in a first historical time period.

In an implementation, first usage data of each of the m service domains may be obtained, and the first usage data is used to implement flexible adjustment of a computing resource in each of the m service domains in the solution of this application.

In another implementation, only first usage data of each of a part of service domains may be obtained, and the first usage data is used to implement flexible adjustment of a computing resource in each of the part of service domains in the solution of this application.

This part of service domains may be determined by a system. Specifically, the system may determine, in the m service domains, one or more service domains in which computing resources are greatly affected by a usage habit of the user. The vehicle is used as an example. Computing resources corresponding to the intelligent driving domain and the cockpit domain are greatly affected by the usage habit of the user, and computing resources in the vehicle control domain are slightly affected by the usage habit of the user. Therefore, in an actual operation, the vehicle system may obtain only user usage data of the intelligent driving domain and the cockpit domain, and adjust resources in the two service domains based on the obtained user usage data, without a need of adjusting the computing resources in the vehicle control domain. Alternatively, this part of service domains may be selected and determined by the user. Specifically, the user may select a part of service domains from the m service domains as objects for flexible adjustment with reference to a usage status of the service domains by the user. The vehicle is used as an example. When the user uses the cockpit domain frequently or has a high requirement on service processing of the cockpit domain, the user may determine the cockpit domain as an object for flexible adjustment. Alternatively, the part of service domains may be determined in advance by a person skilled in the art based on experience.

The first usage data may include one or more of operation data of the user, response duration of a service operated by the user, a computing unit usage proportion of each service domain, a usage score of a service, and the like. The operation data of the user may be, for example, a quantity of times of starting a service based on a user operation. The response duration of the service operated by the user may be understood as response duration of a service started based on a user operation. The computing unit usage proportion of each service domain is a proportion of computing units used by each service domain to computing units included in the service domain. The usage score of the service may be, for example, a score generated by the computing system based on a service running status, or may be a score provided by the user based on experience of the user.

Based on step S310, a quantity (or a proportion, where the proportion is a proportion of a quantity of computing units required by each service domain to a total quantity of computing units, and the total quantity of computing units is a sum of the a dedicated computing units and the b shared computing units) of computing units required by each of the k service domains may be determined based on the first usage data of each of the k service domains. Then, based on the quantity (or the proportion) of the computing units required by each service domain and a quantity of dedicated computing units that have been allocated to each service domain, the quantity (or the proportion) of the computing units in each service domain is adjusted based on the b shared computing units. The foregoing quantity (or the proportion) of the required computing units may be understood as a quantity (or a proportion) of computing units that can meet an actual service scenario.

For ease of description, the following uses only a target service domain in the k service domains as an example to describe adjustment of a quantity of computing units in the target service domain (refer to steps S320 to S340). For another service domain, refer to descriptions of the target service domain.

S320: Determine, based on the first usage data of each service domain, a first quantity of computing units required by the target service domain in the k service domains.

Specifically, a user experience evaluation result of the k service domains may be first determined based on the first usage data of each service domain; then a corresponding computing unit requirement solution is determined based on the user experience evaluation result; and then the first quantity of computing units required by the target service domain is determined based on the computing unit requirement solution.

It should be understood that the user experience evaluation result is an evaluation result obtained by combining the first usage data of each of the k service domains, and the evaluation result may be, for example, an evaluation score. The requirement solution determined based on the user experience evaluation result may include the quantity of computing units required by each of the k service domains. The quantity (namely, the first quantity) of computing units required by the target service domain in the k service domains may be determined based on the requirement solution.

In an actual operation, correspondences between different evaluation results and different requirement solutions may be preset based on a mapping table. Based on this, in this application, the user experience evaluation result of the k service domains may be first determined based on the first usage data of each service domain, then the requirement solution corresponding to the evaluation result is obtained by searching the mapping table, and then the quantity of computing units required by the target service domain is determined based on the requirement solution.

Optionally, the first quantity of computing units required by the target service domain is determined based on the usage data of the user, or the first quantity of computing units required by the target service domain may be determined based on a service status of the target service domain. The service status may be, for example, a video playing state, a multi-application expansion state, or an intelligent driving enable/disable state. For ease of description, the following mainly uses the usage data of the user as an example for description.

S330: Determine, in the b shared computing units based on the first quantity and a second quantity of dedicated computing units that are in the a dedicated computing units and that have been allocated to the target service domain, a third quantity of shared computing units that need to be allocated to the target service domain.

S340: Allocate the third quantity of shared computing units to the target service domain.

In other words, the quantity of shared computing units that need to be allocated to the target service domain is determined based on a difference between the quantity of computing units required by the target service domain and the quantity of dedicated computing units that have been allocated to the target service domain, and then the shared computing units are allocated to the target service domain based on the determined quantity.

In this application, the shared computing unit is introduced, so that in a process in which a user uses a computing resource, the computing resource in the target service domain can be flexibly adjusted based on the shared computing unit with reference to a usage habit of the user. For example, when a dedicated computing unit in the target service domain cannot meet a requirement of the user, the shared computing units may be allocated to the target service domain based on the requirement of the user. Therefore, a service processing capability of the target service domain can be ensured; and preemption of a dedicated computing unit of another service domain when a computing requirement of the target service domain is large can be avoided, thereby ensuring service running stability of each service domain.

After the quantity of computing units in the target service domain is adjusted, a service in the target service domain further needs to be re-deployed, so that service running stability and a service processing capability of the target service domain can be ensured.

It should be noted that a service may alternatively be understood as a computing task. One computing task includes one or more operators (operator, OP), and one operator needs to use one or more computing units to complete a related computing task. The operator may be understood as a computing function, and one operator may implement one-step computing of a computing task. Correspondingly, a basic unit used by a computing resource is a group, each group may include one or more computing units, and each group is used to execute a computing task of an operator.

Based on this, in this application, after the quantity of computing units in the target service domain is adjusted, the computing units in the target service domain first need to be grouped, and then the service is redeployed in the target service domain after grouping, so as to ensure continuity and stability of running of each service in the target service domain.

In an implementation, the computing units in the target service domain may be grouped based on prior information of the target service domain. The prior information includes information about a service that has been deployed in the target service domain, and the information about the deployed service refers to an operator included in each service in the previously deployed service and a quantity of computing units required by each operator.

Optionally, in this application, a grouping strategy set of the computing units in the target service domain may be first determined based on a preset condition, then a target grouping strategy is selected from the grouping strategy set based on the prior information of the target service domain, and the computing units in the target service domain are grouped according to the target grouping strategy. In comparison with grouping directly based on the prior information, the target grouping strategy can be determined more quickly and effectively, and an invalid running time is reduced.

Optionally, in this application, the grouping strategy set of the computing units in the target service domain may be first determined based on the preset condition, then the target grouping strategy is determined by searching the grouping strategy set, and the computing units in the target service domain are grouped according to the target grouping strategy. Optionally, the searching may be performed in the following manner: performing simulated grouping according to each grouping strategy in the grouping strategy set, performing simulated service deployment and simulated running for each simulated group, and determining the target grouping strategy based on a processing capability and service stability of a service in simulated running.

The preset condition may include at least one of the following: a quantity of computing units included in each group is 2ⁿ, where n is a positive integer greater than or equal to 1; a quantity of groups is less than or equal to a quantity of services that need to be deployed; a quantity of computing units in a first group is less than or equal to a quantity of computing units required by a first operator, where the first group is a group that includes a largest quantity of computing units in a service domain, and the first operator is an operator that requires a largest quantity of computing units in a service that needs to be deployed; or a quantity of computing units in a second group is greater than or equal to a quantity of computing units required by a second operator, where the second group is a group that includes a smallest quantity of computing units in a service domain, and the second operator is an operator that requires a smallest quantity of computing units in a service that needs to be deployed. It should be understood that the preset condition may alternatively be determined with reference to an actual situation, and is not limited to the preset conditions listed above.

Because usage habits of a same user in different time periods may be different, the method 300 may further include: obtaining second usage data of each of the k service domains, where the second usage data is data about using the service domain by the user in a second historical time period; and updating a quantity of computing units in the target service domain based on the second usage data. In this way, the quantity of computing units in the target service domain is flexibly updated based on the usage habit of the user in different time periods, so that a service processing capability of the target service domain can be ensured in different time periods even if the usage habit of the user changes.

The second usage data may also include one or more of operation data of the user, response duration of a service operated by the user, a computing unit usage proportion of each service domain, a usage score of a service, and the like. For details, refer to the foregoing description of the first usage data.

In practice, the quantity of computing units in the target service domain may be continuously updated based on a preset frequency and according to the foregoing method. The preset frequency may be, for example, one hour, 12 hours, one day, one week, or one month. Alternatively, the quantity may be updated when the system detects that the usage habit of the user changes or an obvious change occurs. Alternatively, an update may be actively triggered by the user with reference to a requirement of the user. This is not limited in this application. In practice, when the quantity of computing units in the target service domain is continuously updated based on the preset frequency, the update may be stopped when the quantity of computing units in the target service domain tends to be stable.

The historical time period may be a time period before a current moment, for example, within several hours or several days before the current moment.

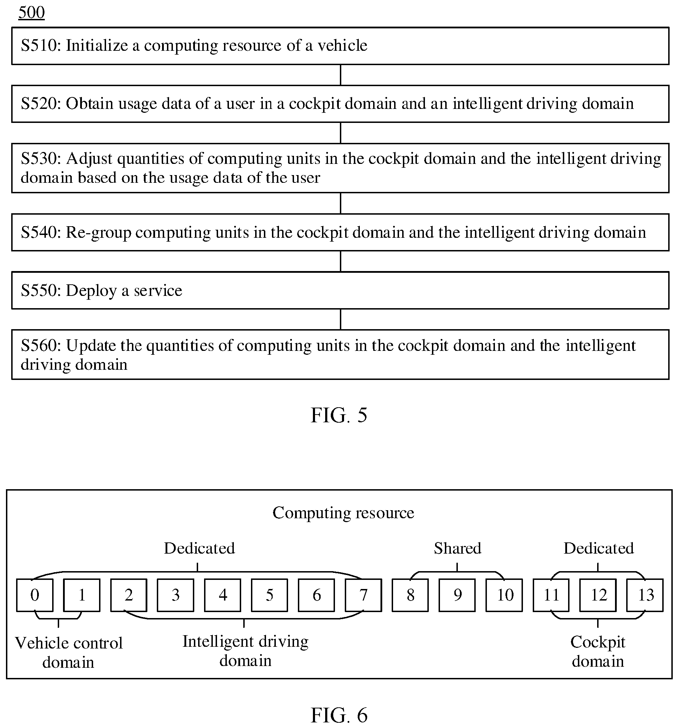

With reference to FIG. 5 to FIG. 7, the following describes the solutions of this application by using a method for adjusting a computing resource by a vehicle as an example.

FIG. 5 is a diagram of a method for adjusting a computing resource by a vehicle according to an embodiment of this application. As shown in FIG. 5, the method 500 includes steps S510 to S550. The following describes these steps.

S510: Initialize a computing resource of a vehicle.

In an initial state, the computing resource of the vehicle may be configured to include a plurality of dedicated computing units and a plurality of shared computing units that run in parallel, the plurality of dedicated computing units are allocated to a plurality of actual service domains, and a service domain shared by the shared computing units is determined.

For example, as shown in FIG. 6, in an initial state, the computing resource of the vehicle is configured to include 11 dedicated computing units {0, 1, 2, 3, 4, 5, 6, 7, 11, 12, 13} and three shared computing units {8, 9, 10}. Two dedicated computing units {0, 1} in the 11 dedicated computing units {0, 1, 2, 3, 4, 5, 6, 7, 11, 12, 13} are allocated to a vehicle control domain to provide a computing capability for the vehicle control domain. Six dedicated computing units {2, 3, 4, 5, 6, 7} are allocated to an intelligent driving domain, to provide a computing capability for the intelligent driving domain. Three dedicated computing units {11, 12, 13} are allocated to a cockpit domain, to provide a computing capability for the cockpit domain. In addition, the three shared computing units {8, 9, 10} are configured to be shared in the intelligent driving domain and the cockpit domain. In other words, the shared computing units are mainly used to flexibly adjust computing resources in the cockpit domain and the intelligent driving domain. It should be understood that the foregoing quantity of computing units and the service domains are merely used as examples, and do not constitute a limitation on the solutions of this application. For ease of description, steps S520 to S560 are described based on this example.

Optionally, the foregoing initialization of the computing resource may be completed when the vehicle is delivered from a factory, or initialization may be performed by a professional person based on a user requirement after the user purchases the vehicle. This is not limited.

S520: Obtain usage data of the user in the cockpit domain and the intelligent driving domain.

In a running process of the vehicle, usage data of the user in the cockpit domain and the intelligent driving domain in a historical time period may be obtained.

For example, for the cockpit domain, a quantity of times of tapping an application in a cockpit by the user in the historical time period, response duration of an application tapped by the user in the historical time period, and a computing unit usage proportion of the cockpit domain in the historical time period may be obtained.

For example, for the intelligent driving domain, a quantity of times of enabling an intelligent driving function by the user in the historical time period, a quantity of takeover times of the user in the historical time period, a score of the intelligent driving function in a running time period, and a computing unit usage proportion of the intelligent driving domain in the historical time period may be obtained.

S530: Adjust quantities of computing units in the cockpit domain and the intelligent driving domain based on the usage data of the user.

A user experience evaluation score may be first determined based on the usage data of the user in the cockpit domain and the intelligent driving domain; then a computing unit requirement solution corresponding to the evaluation score is determined based on a preset mapping table, where the requirement solution includes a quantity of computing units required by each of the cockpit domain and the intelligent driving domain; and then the quantities of computing units in the cockpit domain and the intelligent driving domain are adjusted through the shared computing unit based on quantities of existing dedicated computing units in the cockpit domain and the intelligent driving domain and quantities of computing units required by the cockpit domain and the intelligent driving domain.

The usage data listed in step S520 is used as an example. The user experience evaluation score may be determined in the following manner: first, obtaining, based on the quantity of times of tapping the application in the cockpit by the user in the historical time period, a quantity of times of tapping the application in the cockpit by the user in a unit time, obtaining, based on the response duration of the application tapped by the user in the historical time period, response duration of the application in the unit time, obtaining, based on the computing unit usage proportion of the cockpit domain in the historical time period, an average computing unit usage proportion of the cockpit domain, obtaining, based on the quantity of times of enabling the intelligent driving function in the historical time period, a quantity of times of enabling the intelligent driving function in the unit time, obtaining, based on the quantity of takeover times of the user in the historical time period, a quantity of takeover times of the user in the unit time, obtaining, based on the score of the intelligent driving function in the running period, an average score (or a valid score) of the intelligent driving function in the running period, and obtaining, based on the computing unit usage proportion of the intelligent driving domain in the historical time period, an average computing unit usage proportion of the intelligent driving domain; then standardizing or normalizing the obtained data; and performing weighted summation on the standardized or normalized data to obtain the evaluation score. The unit time may be one hour, one day, one week, one month, or the like.

In an implementation, the preset mapping table may include correspondences between different score ranges and different requirement solutions. For example, when the evaluation score is a first value, it is determined that the first value is in a first score range, and the first score range corresponds to a first requirement solution; or when the evaluation score is a second value, it is determined that the second value is in a second score range, and the second score range corresponds to a second requirement solution.

S540: Re-group computing units in the cockpit domain and the intelligent driving domain.

Specifically, after the quantities of computing units in the cockpit domain and the intelligent driving domain are adjusted, a grouping strategy set of the computing units in the cockpit domain and the intelligent driving domain may be first determined based on a preset condition; and then a target grouping strategy is determined from the grouping strategy set, and the computing units in the cockpit domain and the intelligent driving domain are separately grouped according to the target grouping strategy. For the preset condition and a manner of determining the target grouping strategy in the grouping strategy set, refer to the foregoing descriptions.

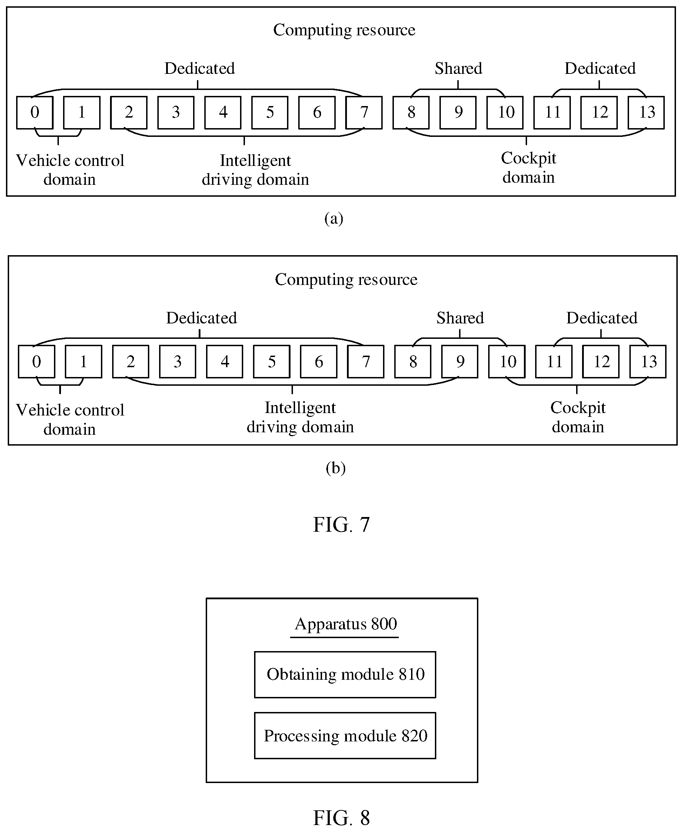

In an example, as shown in (a) in FIG. 7, it is assumed that the quantity of computing units in the adjusted intelligent driving domain is six, for example, computing units {2, 3, 4, 5, 6, 7}, and the quantity of computing units in the cockpit domain is also six, for example, computing units {8, 9, 10, 11, 12, 13}. When the quantity of computing units in each group is required to be 2ⁿ, the grouping strategy set of the intelligent driving domain may include two grouping strategies. In a first grouping strategy, the six computing units are divided into three groups, and each group includes two computing units. For example, a group 1 includes computing units {2, 3}, a group 2 includes computing units {4, 5}, and a group 3 includes computing units {6, 7}. In a second grouping strategy, the six computing units are divided into two groups. A group 1 includes two computing units, for example, computing units {2, 3}, and a group 2 includes four computing units, for example, computing units {4, 5, 6, 7}. The grouping strategy set of the cockpit domain may also include two grouping strategies. In a first grouping strategy, the six computing units are divided into three groups, and each group includes two computing units. For example, a group 1 includes computing units {8, 9}, a group 2 includes computing units {10, 11}, and a group 3 includes computing units {12, 13}. In a second grouping strategy, the six computing units are divided into two groups. A group 1 includes two computing units, for example, computing units {8, 9}, and a group 2 includes four computing units, for example, computing units {10, 11, 12, 13}.

In another example, as shown in (b) in FIG. 7, it is assumed that the quantity of computing units in the adjusted intelligent driving domain is eight, for example, computing units {2, 3, 4, 5, 6, 7, 8, 9}, and the quantity of computing units in the cockpit domain is four, for example, computing units {10, 11, 12, 13}. When the quantity of computing units in each group is required to be 2ⁿ, the grouping strategy set of the intelligent driving domain may include four grouping strategies. In a first grouping strategy, the eight computing units are divided into four groups, and each group includes two computing units. For example, a group 1 includes computing units {2, 3}, a group 2 includes computing units {4, 5}, a group 3 includes computing units {6, 7}, and a group 4 includes computing units {8, 9}. In a second grouping strategy, the eight computing units are divided into two groups. A group 1 includes four computing units, for example, computing units {2, 3, 4, 5}, and a group 2 includes four computing units, for example, computing units {6, 7, 8, 9}. In a third grouping strategy, the eight computing units are divided into three groups. A group 1 includes two computing units, for example, computing units {2, 3}, a group 2 includes four computing units, for example, computing units {4, 5, 6, 7}, and a group 3 includes two computing units, for example, computing units {8, 9}. In a fourth grouping strategy, the eight computing units are divided into one group, and the group includes eight computing units, for example, computing units {2, 3, 4, 5, 6, 7, 8, 9}. The grouping strategy set of the cockpit domain may include two grouping strategies. In a first grouping strategy, the four computing units are divided into two groups, and each group includes two computing units. For example, a group 1 includes computing units {10, 11}, and a group 2 includes computing units {12, 13}. In a second grouping strategy, the four computing units are divided into one group, and the group includes four computing units, for example, computing units {10, 11, 12, 13}.

S550: Deploy a service. In other words, services are redeployed in the cockpit domain and the intelligent driving domain after grouping, to ensure service running stability and service processing capabilities in the cockpit domain and the intelligent driving domain.

S560: Update the quantities of computing units in the cockpit domain and the intelligent driving domain.

Specifically, during vehicle running, the usage data of the user in the cockpit domain and the intelligent driving domain may be continuously collected; the quantities of computing units in the cockpit domain and the intelligent driving domain are separately updated based on the collected usage data; and after the update, the computing units in the cockpit domain and the intelligent driving domain are separately grouped and deployed.

FIG. 8 is a diagram of a structure of an apparatus for adjusting a computing resource according to an embodiment of this application. The computing resource includes a dedicated computing units and b shared computing units that run in parallel, and the a dedicated computing units are allocated to m service domains. The apparatus 800 includes an obtaining module 810 and a processing module 820. Optionally, the apparatus further includes the a dedicated computing units and the b shared computing units.

The obtaining module 810 is configured to obtain first usage data of each of k service domains, where the first usage data is data about using the service domain by a user in a first historical time period, and the k service domains are one or more of the m service domains.

The processing module 820 is configured to: determine, based on the first usage data of each service domain, a first quantity of computing units required by a target service domain in the k service domains; determine, in the b shared computing units based on the first quantity and a second quantity of dedicated computing units that are in the a dedicated computing units and that have been allocated to the target service domain, a third quantity of shared computing units that need to be allocated to the target service domain; and allocate the third quantity of shared computing units to the target service domain.

Optionally, the processing module 820 may be further configured to: group computing units in the target service domain based on prior information of the target service domain, where the prior information includes information about a service that has been deployed in the target service domain; and redeploy the service in the target service domain after grouping.

Optionally, the processing module 820 may be further configured to: determine a grouping strategy set of the computing units in the target service domain based on a preset condition; determine a target grouping strategy based on the prior information of the target service domain, where the target grouping strategy is a strategy in the grouping strategy set; and group the computing units in the target service domain according to the target grouping strategy.

Optionally, the preset condition may include at least one of the following: a quantity of computing units included in each group is 2ⁿ; a quantity of groups is less than or equal to a quantity of services that need to be deployed; a quantity of computing units in a first group is less than or equal to a quantity of computing units required by a first operator, where the first group is a group that includes a largest quantity of computing units in a service domain, and the first operator is an operator that requires a largest quantity of computing units in a service that needs to be deployed; or a quantity of computing units in a second group is greater than or equal to a quantity of computing units required by a second operator, where the second group is a group that includes a smallest quantity of computing units in a service domain, and the second operator is an operator that requires a smallest quantity of computing units in a service that needs to be deployed.

Optionally, the processing module 820 may be configured to: determine a user experience evaluation result of the k service domains based on the first usage data of each service domain; determine a corresponding computing unit requirement solution based on the user experience evaluation result; and determine, based on the computing unit requirement solution, the first quantity of computing units required by the target service domain.

Optionally, the processing module 820 may be further configured to: obtain second usage data of each of the k service domains, where the second usage data is data about using the service domain by the user in a second historical time period; and update a quantity of computing units in the target service domain based on the second usage data.

Optionally, the first usage data and/or the second usage data may include one or more of operation data of the user, response duration of a service operated by the user, a computing unit usage proportion of each service domain, and a usage score of a service.

Optionally, the m service domains may be located in a vehicle. The apparatus is an in-vehicle computing platform.

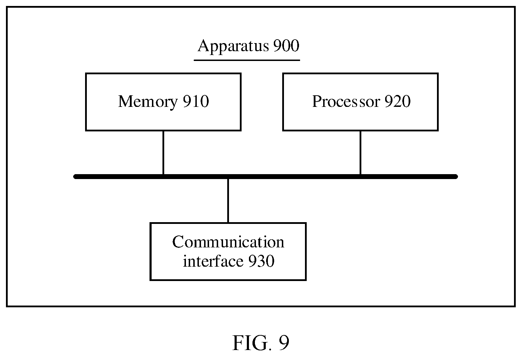

FIG. 9 is a block diagram of a hardware structure of an apparatus for adjusting a computing resource according to an embodiment of this application. Optionally, the apparatus 900 may be specifically a computer device. The apparatus 900 includes a memory 910, a processor 920, and a communication interface 930. The memory 910, the processor 920, and the communication interface 930 may implement mutual communication connections through a bus.

The memory 910 may be a read-only memory (read-only memory, ROM), a static storage device, a dynamic storage device, or a random access memory (random access memory, RAM). The memory 910 may store a program. When the program stored in the memory 910 is executed by the processor 920, the processor 920 is configured to perform the steps of the method 300 or 500 for adjusting a computing resource in embodiments of this application.

The processor 920 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the method 300 or 500 for adjusting a computing resource in method embodiments of this application.

The processor 920 may be an integrated circuit chip and has a signal processing capability. In an implementation process, the method 300 or 500 for adjusting a computing resource in this application may be implemented by using an integrated logic circuit of hardware in the processor 920 or an instruction in a form of software.

The communication interface 930 uses a transceiver apparatus, for example but not limited to a transceiver, to implement communication between the apparatus 900 and another device or a communication network.

An embodiment of this application further provides a computer-readable storage medium, including instructions. When the instructions are run on a computer, the computer is enabled to perform the foregoing method 300 or 500 for adjusting a computing resource.

An embodiment of this application further provides a computer program product, including instructions. When the instructions are run on a computer, the foregoing method 300 or 500 for adjusting a computing resource is performed.

An embodiment of this application further provides a computing device, including at least one processor and a memory. The at least one processor is coupled to the memory, and is configured to read and execute instructions in the memory, to perform the foregoing method 300 or 500 for adjusting a computing resource.

An embodiment of this application further provides a chip. The chip includes a processor and a data interface. The processor reads, through the data interface, instructions stored in a memory, and performs the foregoing method 300 or 500 for adjusting a computing resource, or the chip performs the foregoing method 300 or 500 for adjusting a computing resource through a hardware circuit.

An embodiment of this application further provides an intelligent driving device, including the foregoing apparatus 800 and/or apparatus 900 for adjusting a computing resource.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, or each of the units may exist alone physically, or two or more units may be integrated into one unit.

The foregoing descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for adjusting a computing resource, wherein the computing resource comprises a dedicated computing units and b shared computing units that run in parallel, and the a dedicated computing units are allocated to m service domains, wherein a, b, and m are all positive integers greater than or equal to 2; and the method comprises:
obtaining first usage data of each of k service domains, wherein the first usage data is data about using the service domain by a user in a first historical time period, and the k service domains are one or more of the m service domains;
determining, based on the first usage data of each service domain, a first quantity of computing units required by a target service domain in the k service domains;
determining, in the b shared computing units based on the first quantity and a second quantity of dedicated computing units that are in the a dedicated computing units and that have been allocated to the target service domain, a third quantity of shared computing units that need to be allocated to the target service domain; and
allocating the third quantity of shared computing units to the target service domain.

2. The method according to claim 1, wherein after the allocating the third quantity of shared computing units to the target service domain, the method further comprises:
grouping computing units in the target service domain based on prior information of the target service domain, wherein the prior information comprises information about a service that has been deployed in the target service domain; and
redeploying the service in the target service domain after grouping.

3. The method according to claim 2, wherein the grouping computing units in the target service domain based on prior information of the target service domain comprises:
determining a grouping strategy set of the computing units in the target service domain based on a preset condition;
determining a target grouping strategy based on the prior information of the target service domain, wherein the target grouping strategy is a strategy in the grouping strategy set; and
grouping the computing units in the target service domain according to the target grouping strategy.

4. The method according to claim 3, wherein the preset condition comprises at least one of the following:
a quantity of computing units comprised in each group is 2ⁿ, wherein n is a positive integer greater than or equal to 1;
a quantity of groups is less than or equal to a quantity of services that need to be deployed;
a quantity of computing units in a first group is less than or equal to a quantity of computing units required by a first operator, wherein the first group is a group that comprises a largest quantity of computing units in a service domain, and the first operator is an operator that requires a largest quantity of computing units in a service that needs to be deployed; or
a quantity of computing units in a second group is greater than or equal to a quantity of computing units required by a second operator, wherein the second group is a group that comprises a smallest quantity of computing units in a service domain, and the second operator is an operator that requires a smallest quantity of computing units in a service that needs to be deployed.

5. The method according to any one of claims 1 to 4, wherein the determining, based on the first usage data of each service domain, a first quantity of computing units required by a target service domain in the k service domains comprises:
determining a user experience evaluation result of the k service domains based on the first usage data of each service domain;
determining a corresponding computing unit requirement solution based on the user experience evaluation result; and
determining, based on the computing unit requirement solution, the first quantity of computing units required by the target service domain.

6. The method according to any one of claims 1 to 5, wherein the method further comprises:
obtaining second usage data of each of the k service domains, wherein the second usage data is data about using the service domain by the user in a second historical time period; and
updating a quantity of computing units in the target service domain based on the second usage data.

7. The method according to claim 6, wherein the first usage data and/or the second usage data comprise/comprises:
one or more of operation data of the user, response duration of a service operated by the user, a computing unit usage proportion of each service domain, and a usage score of a service.

8. The method according to any one of claims 1 to 7, wherein the m service domains are located in a vehicle.

9. An apparatus for adjusting a computing resource, wherein the computing resource comprises a dedicated computing units and b shared computing units that run in parallel, and the a dedicated computing units are allocated to m service domains, wherein a, b, and m are all positive integers greater than or equal to 2; and the apparatus comprises an obtaining module and a processing module, wherein
the obtaining module is configured to obtain first usage data of each of k service domains, wherein the first usage data is data about using the service domain by a user in a first historical time period, and the k service domains are one or more of the m service domains; and
the processing module is configured to: determine, based on the first usage data of each service domain, a first quantity of computing units required by a target service domain in the k service domains; determine, in the b shared computing units based on the first quantity and a second quantity of dedicated computing units that are in the a dedicated computing units and that have been allocated to the target service domain, a third quantity of shared computing units that need to be allocated to the target service domain; and allocate the third quantity of shared computing units to the target service domain.

10. The apparatus according to claim 9, wherein the processing module is further configured to:
group computing units in the target service domain based on prior information of the target service domain, wherein the prior information comprises information about a service that has been deployed in the target service domain; and
redeploy the service in the target service domain after grouping.

11. The apparatus according to claim 10, wherein the processing module is further configured to:
determine a grouping strategy set of the computing units in the target service domain based on a preset condition;
determine a target grouping strategy based on the prior information of the target service domain, wherein the target grouping strategy is a strategy in the grouping strategy set; and
group the computing units in the target service domain according to the target grouping strategy.

12. The apparatus according to claim 11, wherein the preset condition comprises at least one of the following:
a quantity of computing units comprised in each group is 2ⁿ, wherein n is a positive integer greater than or equal to 1;
a quantity of groups is less than or equal to a quantity of services that need to be deployed;
a quantity of computing units in a first group is less than or equal to a quantity of computing units required by a first operator, wherein the first group is a group that comprises a largest quantity of computing units in a service domain, and the first operator is an operator that requires a largest quantity of computing units in a service that needs to be deployed; or
a quantity of computing units in a second group is greater than or equal to a quantity of computing units required by a second operator, wherein the second group is a group that comprises a smallest quantity of computing units in a service domain, and the second operator is an operator that requires a smallest quantity of computing units in a service that needs to be deployed.

13. The apparatus according to any one of claims 9 to 12, wherein the processing module is configured to:
determine a user experience evaluation result of the k service domains based on the first usage data of each service domain;
determine a corresponding computing unit requirement solution based on the user experience evaluation result; and
determine, based on the computing unit requirement solution, the first quantity of computing units required by the target service domain.

14. The apparatus according to any one of claims 9 to 13, wherein the processing module is further configured to:
obtain second usage data of each of the k service domains, wherein the second usage data is data about using the service domain by the user in a second historical time period; and update a quantity of computing units in the target service domain based on the second usage data.

15. The apparatus according to claim 14, wherein the first usage data and/or the second usage data comprise/comprises:
one or more of operation data of the user, response duration of a service operated by the user, a computing unit usage proportion of each service domain, and a usage score of a service.

16. The apparatus according to any one of claims 9 to 15, wherein the m service domains are located in a vehicle.

17. The apparatus according to any one of claims 9 to 15, wherein the apparatus further comprises the a dedicated computing units and the b shared computing units.

18. An apparatus for adjusting a computing resource, comprising an input/output interface, a processor, and a memory, wherein the processor is configured to control the input/output interface to receive and send a signal or information, the memory is configured to store a computer program, and the processor is configured to invoke the computer program from the memory and run the computer program, so that the apparatus for adjusting a computing resource is enabled to perform the method for adjusting a computing resource according to any one of claims 1 to 8.

19. An intelligent driving device, comprising the apparatus for adjusting a computing resource according to any one of claims 9 to 18.
